## Europäisches Patentamt
## European Patent Office
## Office européen des brevets

(11) Publication number: **0 134 271**
**A1**

# EUROPEAN PATENT APPLICATION

(21) Application number: **83108131.0**

(22) Date of filing: **17.08.83**

(51) Int. Cl.⁴: **C 02 F 3/12**
**C 02 F 3/06, B 01 D 23/10**
**B 01 D 23/14**

(43) Date of publication of application:
**20.03.85 Bulletin 85/12**

(84) Designated Contracting States:
**AT BE CH DE FR GB LI LU NL SE**

(71) Applicant: **Hydro International SA**
**Am Schrägen Weg 2**
**Vaduz(LI)**

(72) Inventor: **Allavena, Riccardo**
**Via San Galdino 11**
**I-20100 Milano(IT)**

(74) Representative: **Hansen, Bernd, Dr.rer.nat. et al,**
**Hoffmann, Eitle & Partner Patentanwälte Arabellastrasse**
**4**
**D-8000 München 81(DE)**

(54) Process and plant for the biological depuration of effluents.

(57) In the biological treatment of effluents, particularly town sewage water, by means of carbon filtering masses produced from resinous wood, the water to be treated is fed to the carbon filtering mass at a speed and flow rate such as to cause an expansion of the filtering layer ensuring the contact time necessary for completing the biological depurating action.

EP 0 134 271 A1

Croydon Printing Company Ltd.

- 1 -

## Process and plant for the biological depuration of effluents

The present invention relates to the biological depuration of effluents, particularly of town effluent waters.

It is known that the most popular and used process for the depuration of discharge water, especially town effluent water, is the so-called biological or active sludge process, according to which the water after a preliminary primary settling and mechanical treatment for the removal of the coarser foreign matter is added with the active sludge containing micro-organisms capable of destroying the polluting substances of organic nature contained in the water, th∙ latter having been previously aerated.

By a subsequent settling the muds resulting from the biological treatment are separated (these muds being partially returned to the process forming the aforesaid active sludge) and the supernatant liquid is, possibly and preferably, treated in the so-called third step, having the purpose of eliminating those components which cannot be removed by the step with active sludge (such as for instance not biodegradable detergents, solvents, etc.). For this third step there has been proposed, and is often used, active carbon which, however, requires a periodical regeneration, involving the treatment in an oven at a rather high temperature.

There is also known a process for biological depuration based on the use of special carbon masses (Italian Patent No. 843 540), which are produced by the controlled carbonization and the activation of wood of resinous nature, the latter having been previously prepared and treated in view of the carbonization operation.

The resulting carbon mass is in the form of particles or has a low active surface (about 200 sq.m.(g), whereas the usual active carbon shows active surface valves in the order of 800 to 1000 sq.m/g or higher; the carbon mass forms a filtering layer through which passes the effluent to be treated; the effluent having previously been treated by passage through a grid, decantation, and aeration, possibly accompanied by a flocculation.

A specific property of the subject carbon mass is that the regeneration phase, i.e. the phase of restoring of its activity does not require a thermal treatment, as it is needed for all the conventional active carbons, but only a periodic countercurrent washing with respect to the normal flow direction of the effluent to be treated. Such a washing is carried out with pure water and usually by means of part of the water already treated and depurated in the same filtering layer.

The depuration treatment, as above shortly pointed out, is clearly of batch type, since it is necessary and unavoidable to periodically carry out the regenerating counterwashing, at a frequency which is predetermined and may be indicated by the pressure drop through the filtering layer becoming higher than a predetermined threshold.

Secondly, since part of the already treated water must be used for the washing of the filtering layer, it is thereafter recycled upstrem, following again the whole treatment cycle, because this water is filled with the impurities which had been retained onto the particles of the layer of carbon mass, particularly of an extremely fine mud.

Thirdly, the treatment with the aforesaid carbon mass, although of high efficacy has a well-defined limit with regard to BOD (biological oxygen demand).

As otherwise stated, the water fed to the filtering layer will generally undergo a BOD reduction of about 40-50 mg/l of oxygen, corresponding to about one gram of BOD per kilogram of carbon mass. Consequently, if the outcoming water is not further treated it is necessary in order to obtain a BOD value of 15 mg/l $O_2$, to feed water to the filter which must have a BOD value of about 60 mg/l $O_2$.

The main purpose of the present invention is to provide a process and a respective plant for the continuous treatment of effluents, particularly town effluent water, based on the use of the aforesaid carbon mass, by which the advantages of the use thereof are maintained (such as avoiding said third step of treatment, the elimination of the thermal regeneration, etc.) without the problems and drawbacks as mentioned above, which do not affect the intrinsic value of the subject carbon mass with respect to desired biological depuration.

This purpose is achieved through a process for the biological treatment of effluent, particularly town effluent water, of the type in which the effluent to be treated is previously aerated and possibly subjected to other preliminary treatments, and is then passed through the carbon mass described in the Italian Patent No. 843 540, characterized in that the effluent to be treated is fed to the carbon mass so as to flow upwardly with a speed and a flow rate such as to cause the carbon mass to expand at a predetermined degree and depending on the contact time desired between the effluent and the particles forming the treatment carbon mass.

In the preceding definition as well as in the following specification the word "expansion" means the volume increase of the layer of carbon mass owing to the mutual spreading of the single particles forming the layer itself.

According to the preferred embodiment of the process according to the present invention, the expansion of the carbon mass layer is at least 30 % with respect to the volume of the same layer in rest condition, and more preferably it is 50 %, since in that way there is achieved an optimum contact time between the water to be treated and the particles of carbon mass in the biological treatment as compared to that of the prior art based on the same carbon mass.

The present invention furthermore provides a plant for carrying out the process of the invention, this plant being of the type comprising an aerating section for the effluent to be treated, a section for biological treatment in which the effluent to be treated is passed through a layer of carbon mass as described in the Italian Patent No. 843 540, and a settling section characterized in that the feeding of the effluent to be treated to said biological treatment section, after passing through said aeration section, takes place below said layer of carbon mass so that the effluent to be treated flows upwardly causing an expansion in a predetermined rate of said layer of carbon mass, and is moreover characterized in that in the connecting duct between said biological treatment section and said settling section means are provided to establish a communication also with that aerating section under the control of valve means, whereby an adjustable part of the effluent treated in the said biological treatment section may be recycled to the said aeration section.

The specific features and advantages of the present invention shall appear more clearly from the following
description referring to the accompanying drawings, in
which:

Fig. 1      is a schematic view of a first embodiment
            of the plant of the invention;

Fig. 2      is a view of a second embodiment, and

Fig. 3      is a chart illustrating the expansion as
            a function of the effluent rate by which
            the effluent passes through the layer of
            carbon mass.

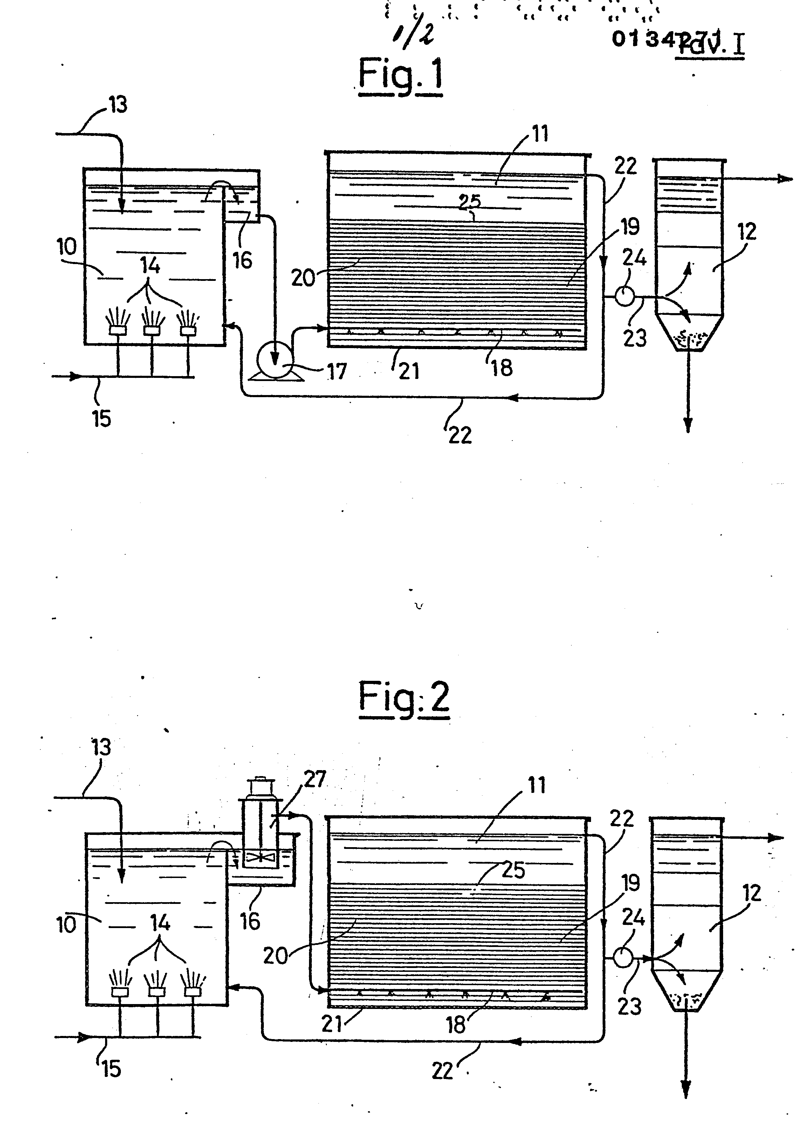

Referring firstly to fig. 1, the references 10, 11 and
12, respectively, indicate the aeration section, the
biological treatment section and the settling section.

In the aeration section 10 the water to be treated is
fed through 13, and by suitable distributors 14 fed
from a header 15 and from an air pressure source (not
shown), the  water is saturated with oxygen.

It is evident that the saturation degree will depend
on other factors, such as for instance the temperature
of the water to be treated.

The latter is then conveyed to a collecting sump 16,
preferably to overflow, and is removed therefrom by
means of the pump 17 and fed to a header 18, positioned
in the basin 11 for biological treatment.

The latter contains the layer 19, formed by the aforesaid carbon mass, this layer reacting in the rest condition, the upper level being indicated by the reference 20, said layer being supported in the lower part by suitable means, such as a metal net and possibly a thin layer of sand, in order to save the spacing from the bottom 21 of the basin 11. A duct 22 provides for the discharge and the recycling to the aeration tank 10.

A drawing duct 23, provided with a control and adjusting valve 24, takes care of the drawing off part of the water discharged from the basin 11 and for conveying the same to the settling tank 12 of conventional type, such as for instance a lamellar decanter.

Reference 25 does furthermore indicate the level achieved in the steady operation condition by the layer 19, i.e. in the expanded status.

In the embodiment of fig. 2, in which the same references indicate parts corresponding to those of fig. 1, a propaller device 27 is provided in the sump 16; this propeller device 27 has the power needed that the water may overcome the slight level difference existing between the basin 11 and the tank 10 and to compensate the pressure drop along the plant of the water stream undergoing the treatment.

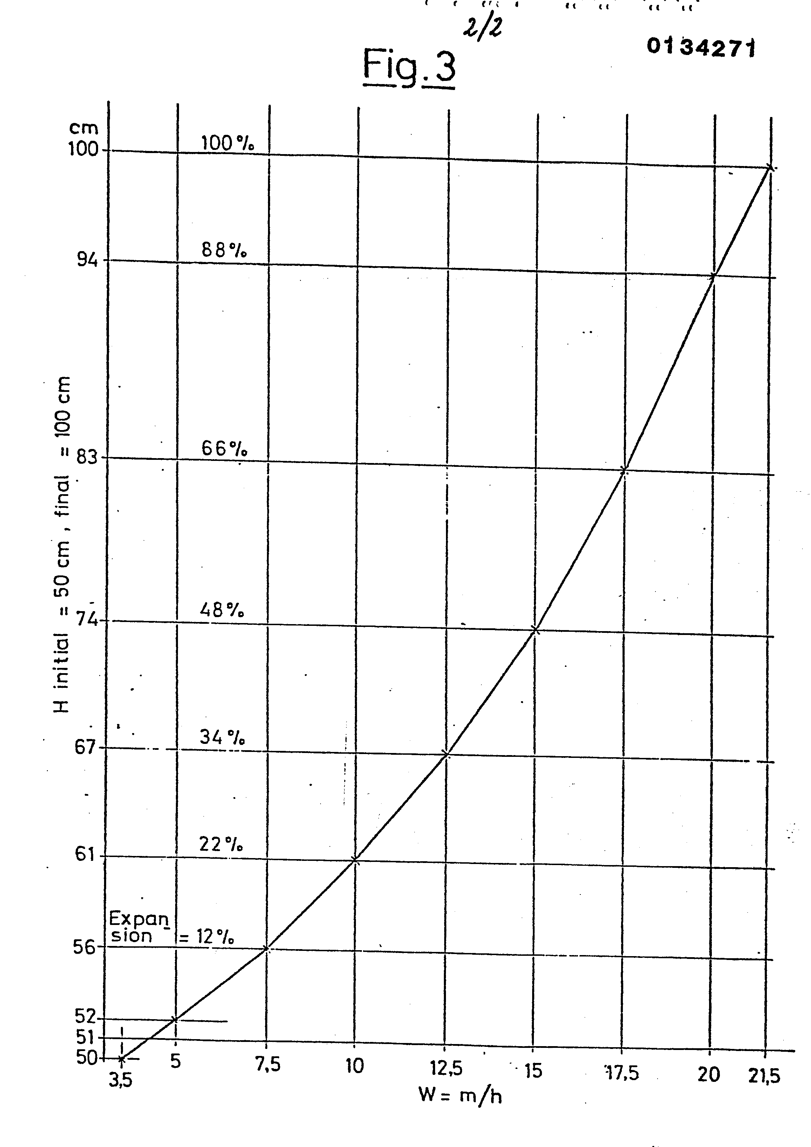

Fig. 3, lastly, shows a chart wherein the linear speeds of the water entering the biological treatment basin are indicated on the abscissa, whereas in the ordinate the height achieved by the layer of carbon mass and thus the expansion percentage is indicated.

From this chart it is noted that an expansion of about 50 % is achieved by a linear speed of about 1.5 m/h. Now, with such a speed it is very difficult to attain the desired degree of depuration and thus of BOD diminution, unless a very high filtering layer is used, which would entail problems both from the point of view of the erecting cost and from that of the operation and maintenance.

According tc the present invention, this problem is solved by recycling the water to be treated to the aeration tank and then repeating the biological treatment through the carbon mass until the desired depuration is achieved.

Then the water is passed to the settling tank.

Under steady operation, especially in the case of fig. 2, the fresh water to be treated, arriving at the aeration tank through feed 13, shall have a flow rate corresponding to that of the water which is concomitantly discharged through the duct 23 to the settling tank 12, whereby the operation of the plant is continuous and self-adjusting as a function of the BOD measurement as carried out in the water coming out of the biological treatment basin 11.

It is, however, to be understood that the aforesaid operation does not encompass the "seeding" phase of the carbon mass, namely the phase in which micro-organisms are generated onto the surface and within the pores of the carbon mass, this step being only classifiable as a plant starting step.

With reference to the embodiment of fig. 2 an operative example of the process of the invention is hereinafter reported.

The aeration tank 10 is fed with sewage water, previously decanted and having a $BOD_5$ (biochemical oxygen demand after 5 days) of 230 mg/l. In the aeration tank the water is saturated with air and thus with the oxygen therein contained.

The layer of carbon mass in the biological treatment basin has a thickness of about 1.70 m. The inlet speed of the water, in order to obtain an expansion of about 50 %, is selected at the value of 15 m/l as derived from the chart of fig. 3.

The layer of carbon mass owing to the expansion achieves a height of about 2.50 m, whereby the contact time between water and carbon mass is in the order of 10 minutes, as it is calculated from the formula:

$$t = \frac{60 \times 2.50}{15} = 10$$

The water at the outlet of the treatment basin is analyzed each hour to bring the plant in conditions of steady operation. To this end a starting phase is carried out in which no discharge of the treated water takes place through the duct 23 and no sewage water enters through the feed 13.

Since the sewage water as a $BOD_5$ of 230 mg/l, consequently:

$$BOD = 230 \times 6 = 1380 \text{ g/sq.m of carbon mass.}$$

The starting phase in closed cycle shall be as follows:

| BOD | initial | 1380 g/6 | $BOD_5$ = 230 mg/1 |
|-----|---------|----------|--------------------|
| BOD | after 1 hour | 1050 /6 | $BOD_5$ = 175 mg/1 |
| BOD | after 2 hours | 730 /6 | $BOD_5$ = 122 mg/1 |
| BOD | after 3 hours | 420 /6 | $BOD_5$ = 70 mg/1 |
| BOD | after 4 hours | 120 /6 | $BOD_5$ = 20 mg/1 |

Upon this value of $BOD_5$ is achieved, the plant is fed with a volume of sewage water containing 300 g of BOD, namely the value of the depurating power of the carbon mass per square meter of surface (which means 300/230 = 1305 litres(hour per square meter of carbon layer) and an equal volume of depurated water is withdrawn from the basin 11 to be sent to the settling tank, thus starting the continuous steady operation.

CLAIMS:

1.  A process for the biological treatment of effluents, particularly town discharge water, of the type in which the effluent to be treated is previously aerated and possibly subjected to other preliminary treatments, and is then passed through a carbon mass, characterized in that the effluent to be treated is fed to the treatment carbon mass so as to flow upwardly with a speed and a flow rate such as to cause the expansion of the carbon mass at a degree predetermined and depending on the desired contact time between the effluent and the particles forming the treatment carbon mass.

2.  A process according to claim 1, characterized in that said expansion is at least 30 % by volume with respect to the initial volume of the carbon mass.

3.  A process according to claim 2, characterized in that said expansion is 50 % by volume.

4.  A process according to claim 1, characterized in that the treated effluent coming out of the said layer of carbon mass is recycled to the same treatment, the aeration phase being previously repeated.

5.  A process according to claim 4, characterized in that said      recycle is repeated a number of times necessary to obtain the desired final value of
BOD.

6.  Plant for the biological treatment of effluents,
of the type comprising an aeration section for the
effluent to be treated, a biological treatment
section in which the effluent passes through a
layer of the carbon mass and a settling section,
said section being in flow communication with each
other, characterized in that the feeding of the
effluent to be treated to said biological treatment section, after passing through said aerating
section, takes place below said layer of carbon mass
so that the effluent to be treated flows upwardly
causing an expansion in a predetermined degree of
said layer of carbon mass, and further characterized in that in the connection between said section
of biological treatment and said settling section
means are provided for establishing a communication
also with said aerating section under the control
of valve means, whereby an adjustable part of the
effluent treated in the said treatment section can
be recycled to said aerating section.

7.  Plant according to claim 6, characterized in that
between said aerating section and said biological treatment
section . a  sump is provided for collecting the
effluent to be  treated, a propeller being housed
in said sump for feeding the effluent to said
biological treatment section.

## Fig.1

## Fig.2

Fig.3

2/2

0134271

European Patent
Office

**EUROPEAN SEARCH REPORT**

0134271
Application number

EP 83 10 8131

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 080 287 (UNION CARBIDE)<br>* Column 1, lines 6-11; column 1, line 63 - column 2, line 41; column 4, line 67 - column 6, line 6; column 12, line 18 - column 13, line 35; column 16, lines 44-63 * | 1,6,7 | C 02 F 3/12<br>C 02 F 3/06<br>B 01 D 23/10<br>B 01 D 23/14 |
| | --- | | |
| A | "Wastewater treatment plant design", WPCF, Washington D.C., page 355, chapter 18, Lancaster Press, Lancaster, PA, USA "Activated carbon adsorption" * Page 360: "Fixed beds and expanded beds"; page 361, left-hand column, lines 7-17 * | 1-3 | |
| | --- | | |
| A | DE-A-2 630 118 (G. TYMOSHCHUK)<br>* Page 1, claims 1,2; page 3, claims 12,14; figures 14,16,17,20 * | 1 | TECHNICAL FIELDS SEARCHED (Int. Cl. ³) |
| | --- | | |
| A | DE-A-3 105 172 (F. KRUPP)<br>* Abstract * | 1 | C 02 F |
| | ---      -/- | | |

The present search report has been drawn up for all claims

| Place of search | Date of completion of the search | Examiner |
|---|---|---|
| THE HAGUE | 12-04-1984 | TEPLY J. |

European Patent Office

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. ³) |
|---|---|---|---|
| A | CHEMICAL ABSTRACTS, vol. 98, no. 8, 21st February 1983, page 313, no. 59284x, Columbus, Ohio, USA K. MOMONOI et al.: "Biological denitrification in attached-growth reactor" & NAGAOKA GIJUTSU KAGAKU DAIGAKU KENKYU HOKOKU 1981, 3, 65-68 * Abstract * | 1 | |

-----

TECHNICAL FIELDS SEARCHED (Int. Cl. ³)

The present search report has been drawn up for all claims

| Place of search | Date of completion of the search | Examiner |
|---|---|---|
| THE HAGUE | 12-04-1984 | TEPLY J. |